# EUROPÄISCHE PATENTSCHRIFT

(11) **EP 2 620 929 B1**
(45) Veröffentlichungstag und Bekanntmachung des Hinweises auf die Patenterteilung: **13.03.2019**
(21) Anmeldenummer: 13150222.1
(22) Anmeldetag: 04.01.2013
(51) Int. Cl.: G08G 1/0965, G08G 1/16, B60Q 1/52, B60Q 9/00

(54) **Verfahren und Vorrichtung zur Erkennung einer Sondersituation im Straßenverkehr**
Method and apparatus for detecting an exceptional traffic situation
Procédé et dispositif de reconnaissance d'une situation particulière dans le trafic routier

(30) Priorität: 24.01.2012 DE 102012200950
(43) Veröffentlichungstag der Anmeldung: 31.07.2013
(73) Patentinhaber: ROBERT BOSCH GMBH, 70442 Stuttgart (DE)
(72) Erfinder: Lehner, Philipp, 74372 Sersheim (DE); Schumann, Michael, 70597 Stuttgart (DE); Kanter, Pascal, 71272 Renningen (DE); Niemz, Volker, 71277 Rutesheim (DE)

(56) Entgegenhaltungen:
- EP-A2- 1 251 032
- DE-A1-102010 022 165
- US-A1- 2009 265 061
- US-A1- 2011 215 915

## Beschreibung

### Stand der Technik

Die vorliegende Erfindung betrifft ein Verfahren sowie eine Vorrichtung zur Erkennung einer Sondersituation im Straßenverkehr.

Um Rettungsfahrzeuge im Falle eines Notfalleinsatzes schneller vorankommen zu lassen, ist es ein übliches Vorgehen, einen Fahrstreifen bzw. eine Rettungsgasse für das Einsatzfahrzeug zu räumen und dieses somit schneller vorankommen zu lassen.

Da moderne Fahrzeuge hinsichtlich des akustischen Komforts ein hohes Dämmmaß für Umgebungsschall aufweisen, werden akustische Signale wie beispielsweise die des Martinshorns mitunter sehr spät von anderen Verkehrsteilnehmern wahrgenommen. Des Weiteren stellen immer lautere Musikanlagen (sogenannte Entertainmentsysteme) die Aufmerksamkeit von Verkehrsteilnehmern zusätzlich auf die Probe, wenn es darum geht, Einsatzfahrzeuge rechtzeitig wahrzunehmen, um ihnen den Weg freizumachen.

Es ist daher eine Aufgabe der vorliegenden Erfindung, solche Sondersituationen im Straßenverkehr automatisch erkennbar zu machen und im Bedarfsfall den Fahrer eines Fahrzeugs zu informieren.

Aus der Schrift EP 1 251 032 A2 ist eine Vorrichtung und ein Verfahren zur Erfassung von Fahrzeugen im rückwärtigen Bereich bekannt. Dabei wird eine Stereokamera verwendet, mittels der stereoskopische Aufnahmen gemacht werden können. Aus diesen stereoskopischen Aufnahmen kann in einem weiteren Schritt die Erkennung eines Notarztwagens abgeleitet werden.

Aus der Schrift DE 10 2010 022 165 A1 ist ein Verfahren und eine Vorrichtung bekannt, bei dem die von Einsatzfahrzeugen akustisch ausgesandten Sondersignale erkannt und zur Warnung des Fahrzeugführers verwendet werden.

### Offenbarung der Erfindung

Die Erfindung löst die vorgenannte Aufgabe durch ein Verfahren mit den Merkmalen gemäß Anspruch 1. Bei einem erfindungsgemäßen Verfahren wird
eine Sondersituation im Straßenverkehr erkannt, indem ein Bereich des Umfeldes eines Fahrzeugs mittels einer Erfassungseinheit erfasst wird. Unter einer Sondersituation sei im Zusammenhang mit der vorliegenden Erfindung eine Situation im Straßenverkehr verstanden, in welcher in Zusammenhang mit einer Alarmfahrt eines Einsatzfahrzeuges ein Fahrstreifen bzw. eine Fahrspur für die Durchfahrt des Einsatzfahrzeuges geräumt werden soll. Ein solcher Fahrstreifen kann beispielsweise auch eine Rettungsgasse sein, welche die Fahrzeuge eines Verkehrsstaus bzw. eines Abschnittes mit zähfließendem Verkehr für die Durchfahrt des Einsatzfahrzeugs bilden. Hierzu erfasst die Erfassungseinheit einen Bereich des Fahrzeugumfeldes beispielsweise durch Aufnahme optischer Signale aus der Fahrzeugumgebung durch eine Kamera. Jedoch können weitere Sensorprinzipien verwendet werden und insbesondere solche Sensoren am Fahrzeug zum Einsatz kommen, welche auch für andere Fahrerassistenzsysteme Verwendung finden. Beispielsweise seien "Park Distance Control" (PDC), Frontkameras zur Verkehrsschilderkennung sowie Nachtsicht- und Radargeräte ebenso wie die beispielsweise zur Rückfahrassistenz verwendete Rückfahrkamera genannt. Der zu erfassende Umfeldbereich des Fahrzeugs ist dabei insbesondere auf die nähere Umgebung des Fahrzeugs begrenzt, wobei anhand bekannter Charakteristika (z.B. Leitplanke) relevante Bereiche aus den erfassten Signalen bevorzugt verarbeitet werden können (sog. region of interest (ROI)). Die erfassten Signale werden erfindungsgemäß dahingehend untersucht, ob im Erfassungsbereich befindliche Fahrzeuge eine Rettungsgasse bilden. Das Bilden einer Rettungsgasse hinter einem im Wesentlichen zentral auf seiner Fahrspur befindlichen Fahrzeug kann beispielsweise innerhalb eines Kamerabildes dadurch festgestellt werden, dass sich die Fahrzeuge in Richtung der Randbereiche des aufgenommenen Bildes der Rückfahrkamera bewegen. Ein solches Bewegungsmuster könnte selbstverständlich auch durch andere Sensoren wie beispielsweise PDC-Sensoren erfasst und zur Auswertung weitergeleitet werden. Gegebenenfalls kann auch eine Schrägstellung der Fahrzeuge in Richtung der Fahrbahnaußenseite einen Indikator dafür darstellen, dass die Fahrer der Fahrzeuge beispielsweise einen mittleren Fahrstreifen zu räumen versuchen. Hierzu kann auch ein entsprechender Lenkeinschlag der hinter dem Ego-Fahrzeug befindlichen Fahrzeuge interpretiert werden. Alternativ oder zusätzlich kann das Fahrzeugumfeld durch Sensoren abgesucht werden, ob sich Sonderlichtzeichen (z.B. Blaulicht eines Polizei- oder Rettungsfahrzeugs) im Fahrzeugumfeld feststellen lassen. Insbesondere für den Fall, dass Sonderlichtzeichen in einem Bereich des Fahrzeugumfeldes hinter dem Ego-Fahrzeug festgestellt werden, besteht die Wahrscheinlichkeit, dass das Fahrzeug einen Fahrstreifen räumen oder an der Bildung einer Rettungsgasse teilnehmen sollte. Sowohl Fahrzeugbewegungen als auch Sonderlichtzeichen können mittels bekannter Bildverarbeitungsverfahren aus den erfassten Signalen ermittelt werden.

Die Unteransprüche zeigen bevorzugte Weiterbildungen der Erfindung.

Bevorzugt wird die Erfassung optisch durchgeführt, so dass eine Kamera als Sensor (z.B. die sogenannte Rückfahrkamera) Lichtsignale aus dem Fahrzeug aufnimmt. Dies hat den Vorteil, dass zur Erfassung des Fahrzeugumfeldes keine Signale durch das Ego-Fahrzeug ausgesendet werden müssen. Selbstverständlich ist jedoch eine Kombination bzw. gegenseitige Plausibilisierung von unterschiedlichen Sensoren stammender Signale durch die vorliegende Erfindung umfasst. Alternativ oder zusätzlich können die erfassten Signale dahingehend untersucht werden, ob in ihnen charakteristische Blinksequenzen von sogenannten Rundumleuchten, insbesondere blauen, gelben oder roten Farbtons (Blaulicht), von Einsatzfahrzeugen enthalten sind. Sowohl die Farbe des Blinksignals als auch die Intensität und die Blinksequenz (Helligkeitsmuster über der Zeit) kann dabei als Kriterium verwendet werden, um entsprechende Signale aus den aufgenommenen Signalen zu extrahieren bzw. in diesen zu identifizieren. Alternativ oder zusätzlich kann zusätzlich ermittelt werden, auf welcher Fahrzeugseite eine Rettungsgasse (R) gebildet wird bzw. zu bilden ist. Dem Fahrzeugführer kann daraufhin eine entsprechende optische Anzeige (z.B. im Kombiinstrument bzw. im Headup-Display) und/oder akustische Mitteilung (z.B. über das Kombiinstrument bzw. das Entertainment-System des Fahrzeugs) ergehen, in welcher Richtung das Fahrzeug zur Teilnahme an der Bildung einer Rettungsgasse zu bewegen ist.

Weiter bevorzugt kann das Verfahren eine Signalisierung an den Fahrer vorsehen, wenn eine Sondersituation erkannt worden ist. Dies kann beispielsweise optisch (z.B. durch eine Anzeige im Kombiinstrument des Fahrzeugs) und/oder akustisch (z.B. durch ein Klangzeichen über das Entertainmentsystem des Fahrzeugs) erfolgen.

Gemäß einem weiteren Aspekt der vorliegenden Erfindung wird eine Vorrichtung zur Erkennung einer Sondersituation im Straßenverkehr vorgeschlagen, welche die Merkmale gemäß Anspruch 4 aufweist. Dabei ist eine Erfassungseinheit eingerichtet, einen Bereich im Umfeld des Fahrzeugs zu erfassen. Die Erfassungseinheit kann ein Kamerasystem, ein Radar- oder Lidar-System sowie Systeme auf Ultraschallbasis (z.B. zur Parkassistenz) umfassen. Bevorzugt können bereits für andere Zwecke der Fahrerassistenz im Fahrzeug verbaute Sensoren verwendet und die von ihnen aufgenommenen Signale zur Erkennung einer Sondersituation im Straßenverkehr verwendet werden. Weiter umfasst die erfindungsgemäße Vorrichtung eine Auswerteeinheit, welche die mittels der Erfassungseinheit erfassten Signale auswertet und dabei eingerichtet ist, aus den Signalen zu ermitteln, ob im Erfassungsbereich befindliche Fahrzeuge eine Rettungsgasse bilden. Alternativ oder zusätzlich kann die Auswerteeinheit eingerichtet sein, im Erfassungsbereich hinter dem Fahrzeug Sonderlichtzeichen zu identifizieren. Für beide Alternativen kann die Auswerteeinheit an sich bekannte Algorithmen zur Bildsignalverarbeitung bzw. Sensorsignalverarbeitung umfassen. Durch diese können typische Bewegungsmuster in den Sensorsignalen erkannt und dahingehend bewertet werden, ob eine Sondersituation vorliegt. Selbstverständlich und bevorzugt kann die Auswerteeinheit zu diesem Zwecke weitere Informationen erhalten, welche ein sicheres Feststellen einer Sondersituation erleichtern.

Beispielsweise kann die Auswertung der Signale der Erfassungseinheit eine Auswertung drahtlos empfangener Daten umfassen, aus welchen Aufschluss über die Verkehrssituation im Bereich des Ego-Fahrzeugs erhalten werden kann. Entsprechende Daten werden beispielsweise durch Radiostationen als Verkehrsmeldungen gesendet und können erfindungsgemäß dahingehend ausgewertet werden, ob das Fahrzeug sich in einem durch einen Unfall hervorgerufenen Verkehrsstau befindet. Zusätzlich können Satelliten-basierte Positionsinformationen in die Erkennung einer Sondersituation einfließen. Erkennt das Fahrzeug, dass gemäß den empfangenen Daten ein Unfall in Fahrtrichtung voraus stattgefunden hat und ergeben weitere Ermittlungen, dass sich das Ego-Fahrzeug in einem Verkehrsstau befindet, erscheint die Bildung einer Rettungsgasse bzw. ein Herannahen eines Einsatzfahrzeugs relativ wahrscheinlich. Im Zuge dessen kann das erfindungsgemäße Verfahren eine Auswertung von Daten veranlassen, welche z.B. durch die Rückfahrkamera aufgenommen werden. Ergibt die Auswertung dieser Daten, dass Fahrzeuge im Bereich hinter dem Ego-Fahrzeug eine Rettungsgasse bilden und/oder dass sich ein Einsatzfahrzeug dem Ego-Fahrzeug von hinten nähert (beispielsweise durch Sonderlichtzeichen oder anhand charakteristischer Merkmale bzw. Aufschriften des Fahrzeugs erkannt), kann das erfindungsgemäße Verfahren bzw. die erfindungsgemäße Vorrichtung den Fahrer über dieses Ereignis informieren.

Bevorzugt kann die Auswertung der empfangenen Signale eine Überprüfung der aktuellen Geschwindigkeit des Fahrzeugs umfassen. Liegt die Geschwindigkeit unterhalb einer vordefinierten Schwelle, bzw. wurde seit einer vordefinierten Zeitdauer ein vordefiniertes Fahrprofil (z.B. "stop and go") eingehalten, befindet sich das Fahrzeug mit hoher Wahrscheinlich in einem Verkehrsstau, was die Notwendigkeit der Bildung einer Rettungsgasse erhöht. Zusätzlich oder alternativ kann in die Auswertung eine Information über die aktuell vom Fahrzeug befahrene Fahrspur derart einfließen, dass dem Fahrer auch ein Hinweis darüber gegeben werden kann, in welche Richtung er im Falle einer Sondersituation die Bildung einer Rettungsgasse bzw. das Räumen eines Fahrstreifens begünstigen kann. Auch für die Überprüfung der aktuell vom Fahrzeug befahrenen Fahrspur sind verschiedene Verfahren bzw. Informationen verwendbar. Als Beispiele sei insbesondere lokal im Fahrzeug verfügbares Kartenmaterial eines Satellitennavigationssystems in Verbindung mit dem Empfang von Satellitensignalen zur Positionsbestimmung genannt. Dies setzt jedoch eine sehr exakte Ortung des Fahrzeugs voraus, welche mitunter nicht möglich ist. Zusätzlich kann beispielsweise in den Signalen optischer Sensoren oder Abstandssensoren des Fahrzeugs das Vorhandensein einer links des Fahrzeugs gelegenen Leitplanke erkannt werden und somit darauf geschlossen werden, dass das Fahrzeug sich auf der linken Spur einer Autobahn aufhält. Werden sowohl links als auch rechts des Fahrzeugs Fahrzeuge erkannt, welche stillstehen bzw. sich mit einer dem Ego-Fahrzeug ähnlichen Geschwindigkeit fortbewegen, befindet sich das Fahrzeug mit hoher Wahrscheinlichkeit auf einer mittleren Spur einer Hauptverkehrsstraße bzw. einer Autobahn. Befinden sich links des Fahrzeugs parkende bzw. langsam fahrende Fahrzeuge und ist rechts ein freier Bereich (Standstreifen) mit einer wiederum rechts derselben gelegenen Leitplanke angeordnet, befindet sich das Fahrzeug mit hoher Wahrscheinlichkeit auf der rechten Spur einer Autobahn.

Als weiteres Beispiel sei die Spurerkennung mittels optischer Sensoren wie z.B. Videokameras genannt. Hierbei sind eine Erkennung der Fahrspuren und eine Zuordnung der eigenen Fahrspur dadurch möglich, dass Straßenmarkierungen erfasst und ausgewertet werden.
Da eine Rettungsgasse im Allgemeinen bei zweispurigen Straßen zwischen den beiden regulären Fahrstreifen und bei dreispurigen Straßen zwischen der linken und der mittleren Fahrspur gebildet wird, kann das erfindungsgemäße System auch eine Information an den Fahrer des Ego-Fahrzeugs ausgeben, welche einen Vorschlag für die bevorzugte Fahrtrichtung zur Teilnahme an der Bildung einer Rettungsgasse umfasst.

Weiter bevorzugt kann die Ermittlung bzw. die Auswertung der Signale nur einen Teil der aufgenommenen Signale involvieren. Mit anderen Worten kann ein vorbestimmter Bereich innerhalb des Sensorerfassungsbereiches festgelegt werden, in welchem eine Erkennung von eine Rettungsgasse bildenden Fahrzeugen bzw. von Sonderlichtzeichen erforderlich ist. Ein solcher Bereich kann selbstverständlich auch dynamisch festgelegt werden, indem beispielsweise Erkenntnisse über die Umgebung des Ego-Fahrzeugs verwendet werden. Beispielsweise kann der Bereich links neben einem auf der linken Spur einer Autobahn befindlichen Fahrzeugs bei der Auswertung vernachlässigt werden, so dass aufgrund einer erkannten Leitplanke zwischen dem Ego-Fahrzeug und der Gegenfahrbahn der Bereich hinter der Leitplanke (entsprechend der Gegenfahrbahn) als für das Ego-Fahrzeug nicht relevant klassifiziert und bei der Auswertung der Sensordaten nicht berücksichtigt wird. Selbstverständlich kann auch ein ohnehin im Sichtfeld des Fahrers, also im Bereich vor dem Ego-Fahrzeug liegender Bereich, als ein hinsichtlich der erfindungsgemäßen Auswertung nicht relevanter Bereich festgelegt werden. Insbesondere jedoch das Bilden einer Rettungsgasse kann besonders aufmerksame Fahrer von Fahrzeugen, welche sich vor dem Ego-Fahrzeug befinden, dazu veranlassen, eine Rettungsgasse zu bilden, bevor der Fahrer des Ego-Fahrzeugs die Bildung der Rettungsgasse selbst erkannt hat. Daher ist auch beispielsweise ein in Fahrtrichtung weisender Sensor für die Erkennung einer sich bildenden Rettungsgasse vorteilhaft verwendbar, während ein Sonderlichtzeichen im Allgemeinen durch den Fahrer erkennbar sein dürfte, bevor dieses per PKW-basierter Sensorik festgestellt worden ist.

Bevorzugt können bei der Auswertung aufgenommener Sensorsignale geeignete Algorithmen zur Bildauswertung bzw. zur Objekterkennung verwendet werden, mittels welcher sich Fahrzeuge im Abbild des Fahrzeugumfeldes (je nach Sensorprinzip) als 2D- oder 3D-Objekte identifizieren lassen und sich ihre Bewegungen verfolgen lassen. Insbesondere kann z.B. in Zusammenhang mit Stereovideokameras mittels einer sogenannten Disparitätskarte eine sich innerhalb des Sensorbildes vergrößernde Freifläche als Rettungsgasse detektiert werden. Aber auch bei Monokameras lassen sich z.B. mittels der Berechnung des optischen Flusses Objekte und Freiflächen bestimmen. Selbstverständlich können bei der Auswertung der Sensorsignale auch Kombinationen unterschiedlicher Sensoren bzw. von diesen empfangene Signale ausgewertet werden. Zudem ergibt sich die Möglichkeit, die Auswertungsergebnisse unterschiedlicher Sensoren gegenseitig zu plausibilisieren.

Gemäß einem weiteren Aspekt der vorliegenden Erfindung wird eine Vorrichtung zum autonomen Bewegen eines Fahrzeugs (mitunter als "Fahrroboter" bezeichnet) im Straßenverkehr zur Verfügung gestellt, wobei die Vorrichtung eine Steuereinheit zum Generieren und Senden von Signalen zur Lenkung und/oder Bremsen und/oder Verzögern des Fahrzeugs aufweist. Wird eine wie oben diskutierte Vorrichtung zur Erkennung einer Sondersituation im Straßenverkehr mit einem solchen Fahrroboter logisch verknüpft, kann mit diesem Verbund ein Fahrzeug eingerichtet werden, die Bildung einer Rettungsgasse automatisch vorzunehmen. Ein Anwendereingreifen ist in diesem Fall nicht mehr erforderlich.

Gemäß einem weiteren Aspekt umfasst die vorliegende Erfindung ein Fahrzeug, welches wie im vorstehenden Absatz diskutiert als Fahrroboter eingerichtet ist.

### Kurze Beschreibung der Zeichnungen

Nachfolgend werden Ausführungsbeispiele der Erfindung unter Bezugnahme auf die begleitenden Zeichnungen im Detail beschrieben. In den Zeichnungen ist:
- Figur 1: eine Draufsicht einer Situation eines Verkehrsstaus;
- Figur 2: eine schematische Übersicht über Komponenten eines Ausführungsbeispiels gemäß der vorliegenden Erfindung.

### Ausführungsformen der Erfindung

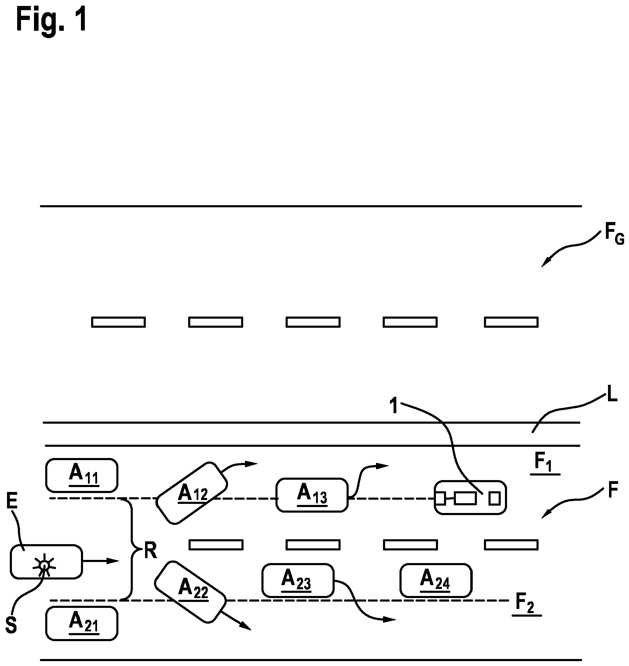

Figur 1 zeigt eine zweispurige Autobahn, deren Fahrbahnen F und FG durch eine Leitplanke L getrennt werden. Der rechte Fahrstreifen F₂ ist durch die Fahrzeuge A₂₁, A₂₂, A₂₃ sowie A₂₄ belegt. Der linke Fahrstreifen F₁ ist durch die Fahrzeuge A₁₁, A₁₂, A₁₃ sowie das Ego-Fahrzeug 1 belegt. In einer Rettungsgasse R naht ein Einsatzfahrzeug E heran. Während die Fahrzeuge A₁₃ und A₂₃ ihren jeweiligen Fahrstreifen F₁ und F₂ noch mittig belegen, bewegen sich die Fahrzeuge A₁₂ und A₂₂ in den jeweils außerhalb der Rettungsgasse R gelegenen Randbezirk ihres jeweiligen Fahrstreifens. Die Fahrzeuge A₁₁ und A₂₁ haben den Randbereich der Fahrstreifen F₁ und F₂ außerhalb der Rettungsgasse R bereits erreicht und lassen das Einsatzfahrzeug E passieren.

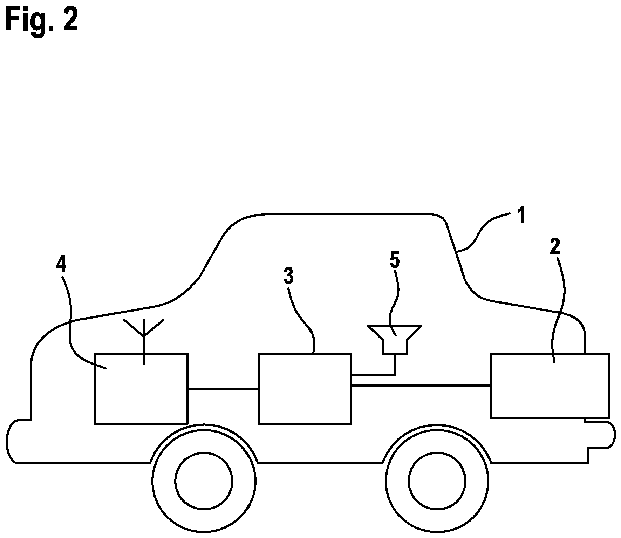

Figur 2 zeigt das Ego-Fahrzeug 1, in welchem sich ein erfindungsgemäßes System befindet. In einem Heckbereich des Fahrzeugs 1 ist ein Sensor 2 als Erfassungseinheit angeordnet. Dieser ist mit einer Auswerteeinheit 3 verbunden, welche einen Mikroprozessor umfassen kann und auch für weitergehende Funktionalitäten innerhalb des Fahrzeugs 1 Verwendung finden kann. Eine Empfangseinheit 4 ist eingerichtet, Radio- und Satellitensignale zum Empfang von Verkehrsinformationen und Positionsinformationen für das Fahrzeug 1 zu empfangen. Die Auswerteeinheit 3 ist mit einem Lautsprecher 5 verbunden, um im Falle einer Erkennung einer Sondersituation den Fahrer des Fahrzeugs 1 darüber in Kenntnis zu setzen.

Das erfindungsgemäße Verfahren sowie die erfindungsgemäße Vorrichtung sind vorstehend anhand zweier erfindungsgemäßer Aspekte sowie einem Ausführungsbeispiel erläutert worden, wobei die Merkmale der Einfachheit halber nicht in jeder möglichen Kombination beschrieben worden sind. Jegliche sinnvolle Kombinationen der dargestellten Aspekte, Merkmale sowie Ausführungsbeispiele sind jedoch als im Bereich der vorliegenden Erfindung liegend zu erachten, deren Schutzbereich durch die beigefügten Ansprüche definiert wird.

## Patentansprüche

1. Verfahren zur Erkennung einer Sondersituation im Straßenverkehr, bei welchem ein Bereich des Umfeldes eines Fahrzeugs (1) mittels einer Erfassungseinheit (2) erfasst wird,
**dadurch gekennzeichnet, dass**
die Erfassungseinheit (2) den Bereich durch optische Signale aus der Fahrzeugumgebung durch eine Kamera erfasst und aus den erfassten Signalen ermittelt wird, ob im Erfassungsbereich befindliche Fahrzeuge (A₁₁, A₁₂, A₁₃, A₂₁, A₂₂, A₂₃, A₂₄) eine Rettungsgasse (R) bilden, indem festgestellt wird, dass sich die Fahrzeuge (A₁₁, A₁₂, A₁₃, A₂₁, A₂₂, A₂₃, A₂₄) in Richtung der Randbereiche eines aufgenommenen Bildes der Kamera bewegen oder indem eine Schrägstellung der Fahrzeuge (A₁₁, A₁₂, A₁₃, A₂₁, A₂₂, A₂₃, A₂₄) in Richtung einer Fahrbahnaußenseite oder ein Lenkeinschlag der hinter dem Fahrzeug (1) befindlichen Fahrzeuge (A₁₁, A₁₂, A₁₃, A₂₁, A₂₂, A₂₃, A₂₄) als Indikator dafür erfasst wird, dass die Fahrer der Fahrzeuge (A₁₁, A₁₂, A₁₃, A₂₁, A₂₂, A₂₃, A₂₄) einen mittleren Fahrstreifen zu räumen versuchen.

2. Verfahren nach Anspruch 1, wobei die Erfassung optisch erfolgt und/oder aus den erfassten Signalen ermittelt wird, ob im Erfassungsbereich hinter dem Fahrzeug Sonderlichtzeichen (S) gesetzt sind, indem die erfassten Signale auf die Präsenz von Blinksequenzen von Rundumkennleuchten (S) von Einsatzfahrzeugen (E) untersucht werden, und/oder aus den erfassten Signalen ermittelt wird, auf welcher Fahrzeugseite eine Rettungsgasse (R) gebildet wird bzw. zu bilden ist; und/oder der Fahrer des Fahrzeugs (1) über eine erkannte Sondersituation optisch und/oder akustisch in Kenntnis gesetzt wird.

3. Verfahren nach Anspruch 2, wobei die erfassten Signale auf die Präsenz von Blinksequenzen von Rundumkennleuchten (S) in Abhängigkeit eines Farbtons untersucht werden.

4. Verfahren nach Anspruch 3, wobei die erfassten Signale auf die Präsenz von Blinksequenzen von Rundumkennleuchten (S) in Abhängigkeit eines blauen und/oder gelben und/oder roten Farbtons untersucht werden.

5. Verfahren nach einem der Ansprüche 1 bis 4, wobei der Fahrer des Fahrzeugs (1) über die Richtung in Kenntnis gesetzt wird, in welche das Fahrzeug (1) zur Teilnahme an der Bildung einer Rettungsgasse (R) zu bewegen ist.

6. Verfahren nach einem der Ansprüche 1 bis 5, wobei die Ermittlung eine Auswertung drahtlos empfangener Daten umfasst, aus welchen Informationen über die Verkehrssituation im Bereich des Fahrzeugs (1) erhalten werden, und/oder
die Ermittlung eine Überprüfung der aktuellen Geschwindigkeit des Fahrzeugs (1) umfasst, und/oder eine Überprüfung hinsichtlich der aktuell vom Fahrzeug (1) befahrenen Fahrspur (F1) umfasst.

7. Verfahren nach einem der Ansprüche 1 bis 6, wobei die Ermittlung umfasst, die Signale hinsichtlich der Präsenz von Einsatzfahrzeugen (E) zu untersuchen, und/oder die Ermittlung des Bildens einer Rettungsgasse (R) nur zu einem vorbestimmten Teilbereich (F1, F2) des erfassten Umfeldes des Fahrzeugs (F) korrespondierende Signale involviert.

8. Verfahren nach einem der Ansprüche 1 bis 7, wobei die Ermittlung eine Bildauswertung umfasst, welche Algorithmen zur Objekterkennung umfasst.

9. Vorrichtung zur Erkennung einer Sondersituation im Straßenverkehr, umfassend
- eine Erfassungseinheit (2) zur Erfassung eines Bereiches des Umfeldes eines Fahrzeugs (1), und
- eine Auswerteeinheit (3) zur Auswertung mittels der Erfassungseinheit (2) erfasster Signale,
**dadurch gekennzeichnet, dass**
- die Erfassungseinheit den Bereich des Umfeld des Fahrzeugs optisch erfasst und
- die Auswerteeinheit (3) eingerichtet ist, aus den Signalen zu ermitteln, ob im Erfassungsbereich befindliche Fahrzeuge (A₁₁,A₁₂, A₁₃, A₂₁, A₂₂, A₂₃, A₂₄) eine Rettungsgasse (R) bilden, indem festgestellt wird, dass sich die Fahrzeuge (A₁₁, A₁₂, A₁₃, A₂₁, A₂₂, A₂₃, A₂₄) in Richtung der Randbereiche eines aufgenommenen Bildes der Kamera bewegen oder indem eine Schrägstellung der Fahrzeuge (A₁₁, A₁₂, A₁₃, A₂₁, A₂₂, A₂₃, A₂₄) in Richtung einer Fahrbahnaußenseite oder ein Lenkeinschlag der hinter dem Fahrzeug (1) befindlichen Fahrzeuge (A₁₁, A₁₂, A₁₃, A₂₁, A₂₂, A₂₃, A₂₄) als Indikator dafür erfasst wird, dass die Fahrer der Fahrzeuge (A₁₁, A₁₂, A₁₃, A₂₁, A₂₂, A₂₃, A₂₄) einen mittleren Fahrstreifen zu räumen versuchen.

10. Vorrichtung nach Anspruch 9, **dadurch gekennzeichnet, dass** die Auswerteeinheit (3) dazu eingerichtet ist, aus den Signalen zu ermitteln, ob im Erfassungsbereich hinter dem Fahrzeug (1) Sonderlichtzeichen (S) gesetzt sind.

11. Vorrichtung nach Anspruch 9 oder 10, wobei die Auswerteeinheit (3) weiter eingerichtet ist, bei der Ermittlung drahtlos empfangene Daten auszuwerten, welchen Informationen über die Verkehrssituation im Bereich des Fahrzeugs (1) enthalten, und/oder
bei der Ermittlung eine aktuelle Geschwindigkeit des Fahrzeugs (1) zu überprüfen, und/oder eine aktuell vom Fahrzeug (1) befahrene Fahrspur (F1) zu überprüfen.

12. Vorrichtung nach einem der Ansprüche 9 bis 11, wobei die Auswerteeinheit (3) weiter eingerichtet ist, bei der Ermittlung die Signale hinsichtlich der Präsenz von Einsatzfahrzeugen (E) zu untersuchen, und/oder bei der Ermittlung des Bildens einer Rettungsgasse (R) nur zu einem vorbestimmten Teilbereich (F1, F2) des erfassten Umfeldes des Fahrzeugs (F) korrespondierende Signale zu involvieren.

13. Vorrichtung nach einem der Ansprüche 9 bis 12, wobei die Auswerteeinheit (3) weiter eingerichtet ist, bei der Ermittlung eine Bildauswertung durchzuführen, welche Algorithmen zur Objekterkennung umfasst.

14. Vorrichtung nach einem der Ansprüche 9 bis 13, wobei der Vorrichtung Signalisierungsmittel (5) zugeordnet sind, welche eingerichtet sind, den Fahrer des Fahrzeugs (1) über eine erkannte Sondersituation in Kenntnis zu setzen.

15. Vorrichtung zum autonomen Bewegen eines Fahrzeugs (1) im Straßenverkehr, umfassend eine Steuereinheit zum Generieren und Senden von Signalen zur Lenkung und/oder zum Beschleunigen und/oder zum Verzögern des Fahrzeugs (1), durch welche ein Fahrzeug (1) eingerichtet werden kann, die Bildung einer Rettungsgasse (R) mittels einer Vorrichtung nach einem der Ansprüche 9 bis 14 automatisch vorzunehmen.

16. Fahrzeug umfassend eine Vorrichtung nach einem der Ansprüche 9 bis 15.

## Claims

1. Method for detecting an exceptional situation in road traffic, in which a region of the surroundings of a vehicle (1) is sensed by means of a sensing unit (2),
**characterized in that**
the sensing unit (2) senses the region by means of optical signals from the surroundings of the vehicle by means of a camera, and from the sensed signals it is determined whether vehicles (A₁₁, A₁₂, A₁₃, A₂₁, A₂₂, A₂₃, A₂₄) which are located in the sensing region form a rescue lane (R), **in that** it is determined that the vehicles (A₁₁, A₁₂, A₁₃, A₂₁, A₂₂, A₂₃, A₂₄) are moving in the direction of the edge regions of a recorded image of the camera or **in that** an oblique position of the vehicles (A₁₁, A₁₂, A₁₃, A₂₁, A₂₂, A₂₃, A₂₄) in the direction of an outer side of a roadway of a steering lock of the vehicles (A₁₁, A₁₂, A₁₃, A₂₁, A₂₂, A₂₃, A₂₄) which are located behind the vehicle (1) is sensed as an indicator that the drivers or the vehicles (A₁₁, A₁₂, A₁₃, A₂₁, A₂₂, A₂₃, A₂₄) are attempting to clear a central lane.

2. Method according to Claim 1, wherein the sensing takes place optically and/or it is determined from the sensed signals whether exceptional light signs (S) are set up in the sensing region behind the vehicle in that the sensed signals are examined for the presence of flashing sequences of rotating beacons (S) of deployment vehicles (E), and/or it is determined from the sensed signals what side of the vehicle a rescue lane (R) is formed on or is to be formed on; and/or the driver of the vehicle (1) is informed optically and/or acoustically about a detected exceptional situation.

3. Method according to Claim 2, wherein the sensed signals are examined for the presence of flashing sequences of rotating beacons (S) as a function of a colour shade.

4. Method according to Claim 3, wherein the sensed signals are examined for the presence of flashing sequences of rotating beacons (S) as a function of a blue and/or yellow and/or red colour shade.

5. Method according to one of Claims 1 to 4, wherein the driver of the vehicle (1) is informed about the direction in which the vehicle (1) is to be moved in order to participate in the formation of a rescue lane (R).

6. Method according to one of Claims 1 to 5, wherein the determination comprises an evaluation of data which are received in a wireless fashion and from which information about the traffic situation in the region of the vehicle (1) is obtained, and/or the determination comprises checking the current speed of the vehicle (1), and/or comprises checking with respect to the lane (F1) which is currently being travelled on by the vehicle (1).

7. Method according to one of Claims 1 to 6, wherein the determination comprises examining the signals with respect to the presence of deployment vehicles (E), and/or the determination of the formation of a rescue lane (R) involves the signals corresponding only to a predetermined partial region (F1, F2) of the sensed surroundings of the vehicle (F).

8. Method according to one of Claims 1 to 7, wherein the determination comprises an image evaluation which comprises algorithms for object recognition.

9. Device for detecting an exceptional situation in road traffic,
comprising
- a sensing unit (2) for sensing a region of the surroundings of a vehicle (1), and
- an evaluation unit (3) for evaluating signals sensed by means of the sensing unit (2),
**characterized in that**
- the sensing unit senses the region of the surroundings of the vehicle optically, and
- the evaluation unit (3) is configured to determine from the signals whether vehicles (A₁₁, A₁₂, A₁₃, A₂₁, A₂₂, A₂₃, A₂₄) located in the sensing region form a rescue lane (R) **in that** it is determined that the vehicles (A₁₁, A₁₂, A₁₃, A₂₁, A₂₂, A₂₃, A₂₄) are moving in the direction of the edge regions of a recorded image of the camera or **in that** an oblique position of the vehicles (A₁₁, A₁₂, A₁₃, A₂₁, A₂₂, A₂₃, A₂₄) in the direction of an outer side of the roadway or a steering lock of the vehicles (A₁₁, A₁₂, A₁₃, A₂₁, A₂₂, A₂₃, A₂₄) located behind the vehicle (1) is sensed as an indicator that the drivers of the vehicles (A₁₁, A₁₂, A₁₃, A₂₁, A₂₂, A₂₃, A₂₄) are attempting to clear a central lane.

10. Device according to Claim 9, **characterized in that** the evaluation unit (3) is configured to determine from the signals whether exceptional light signs (S) are set up in the sensing region behind the vehicle (1).

11. Device according to Claim 9 or 10,' wherein the evaluation unit (3) is also configured to evaluate, during the determination, data which are received in a wireless fashion and which contain information about the traffic situation in the region of the vehicle (1), and/or
to check, during the determination, a current speed of the vehicle (1) and/or to check a lane (F1) which is currently being travelled on by the vehicle (1).

12. Device according to one of Claims 9 to 11, wherein the evaluation unit (3) is also configured to examine, during the determination, the signals with respect to the presence of deployment vehicles (E), and/or to involve, during the determination of the formation of a rescue lane (R), signals which correspond only to a predetermined partial region (F1, F2) of the sensed surroundings of the vehicle (F).

13. Device according to one of Claims 9 to 12, wherein the evaluation unit (3) is also configured to carry out, during the determination, an image evaluation which comprises algorithms for object recognition.

14. Device according to one of Claims 9 to 13, wherein the device is assigned signalling means (5) which are configured to inform the driver of the vehicle (1) about a detected exceptional situation.

15. Device for autonomously moving a vehicle (1) in road traffic, comprising a control unit for generating or transmitting signals for steering and/or accelerating and/or decelerating the vehicle (1), by means of which signals a vehicle (1) can be configured to perform automatically the formation of a rescue lane (R) by means of a device according to one of Claims 9 to 14.

16. Vehicle comprising a device according to one of Claims 9 to 15.

## Revendications

1. Procédé de reconnaissance d'une situation particulière dans le trafic routier, avec lequel une zone de l'environnement d'un véhicule (1) est détectée au moyen d'une unité de détection (2),
**caractérisé en ce que**
l'unité de détection (2) détecte la zone par une caméra par des signaux optiques issus de l'environnement du véhicule et les signaux acquis servent à déterminer si les véhicules (A₁₁, A₁₂, A₁₃, A₂₁, A₂₂, A₂₃, A₂₄) qui se trouvent dans la zone de détection forment une voie d'urgence (R) en constatant que les véhicules (A₁₁, A₁₂, A₁₃, A₂₁, A₂₂, A₂₃, A₂₄) se déplacent dans la direction des zones de bordure d'une image enregistrée de la caméra ou **en ce qu'**une position en biais des véhicules (A₁₁, A₁₂, A₁₃, A₂₁, A₂₂, A₂₃, A₂₄) en direction d'un côté extérieur de la chaussée ou un braquage de la direction des véhicules (A₁₁, A₁₂, A₁₃, A₂₁, A₂₂, A₂₃, A₂₄) qui se trouvent derrière le véhicule (1) est détecté comme indicateur que le.s conducteurs des véhicules (A₁₁, A₁₂, A₁₃, A₂₁, A₂₂, A₂₃, A₂₄) tentent de libérer une bande de circulation centrale.

2. Procédé selon la revendication 1, la détection s'effectuant de manière optique et/ou une détermination étant effectuée à partir des signaux acquis en vue de définir si des signaux lumineux spéciaux (S) sont placés derrière le véhicule en ce que les signaux acquis sont examinés en vue d'y déceler la présence de séquences clignotantes de gyrophares (S) de véhicules d'intervention (E), et/ou une détermination étant effectuée à partir des signaux acquis en vue de définir le côté du véhicule sur lequel est formée ou doit être formée une voie d'urgence (R) ; et/ou le conducteur du véhicule (1) étant informé visuellement et/ou de manière sonore à propos d'une situation spéciale reconnue.

3. Procédé selon la revendication 2, les signaux acquis étant examinés en vue d'y déceler la présence de séquences clignotantes de gyrophares (S) en fonction d'une teinte.

4. Procédé selon la revendication 2 ou 3, les signaux acquis étant examinés en vue d'y déceler la présence de séquences clignotantes de gyrophares (S) en fonction d'une teinte bleue et/ou jaune et/ou rouge.

5. Procédé selon l'une des revendications 1 à 4, le conducteur du véhicule (1) étant informé de la direction dans laquelle le véhicule (1) doit être déplacé pour participer à la formation de la voie d'urgence (R).

6. Procédé selon l'une des revendications 1 à 5, la détermination comprenant une interprétation des données reçues sans fil à partir desquelles sont obtenues des informations à propos de la situation du trafic dans la zone du véhicule (1), et/ou
la détermination comprenant un contrôle de la vitesse actuelle du véhicule (1) et/ou comprenant un contrôle concernant la bande de circulation (F1) dans laquelle circule actuellement le véhicule (1).

7. Procédé selon l'une des revendications 1 à 6, la détermination comprenant un examen des signaux en vue de la présence de véhicules d'intervention (E), et/ou la détermination de la formation de la voie d'urgence (R) impliquant uniquement des signaux correspondant à une zone partielle (F1, F2) prédéterminée de l'environnement détecté du véhicule (F).

8. Procédé selon l'une des revendications 1 à 7, la détermination comprenant une interprétation d'images qui comporte des algorithmes servant à la reconnaissance d'objet.

9. Dispositif de reconnaissance d'une situation particulière dans le trafic routier, comprenant
- une unité de détection (2) destinée à détecter une zone de l'environnement d'un véhicule (1), et
- une unité d'interprétation (3) destinée à interpréter les signaux acquis au moyen de l'unité de détection (2),
**caractérisé en ce que**
- l'unité de détection détecte optiquement la zone de l'environnement du véhicule et
- l'unité d'interprétation (3) est conçue pour déterminer à partir des signaux si les véhicules (A₁₁, A₁₂, A₁₃, A₂₁, A₂₂, A₂₃, A₂₄) qui se trouvent dans la zone de détection forment une voie d'urgence (R) en constatant que les véhicules (A₁₁, A₁₂, A₁₃, A₂₁, A₂₂, A₂₃, A₂₄) se déplacent dans la direction des zones de bordure d'une image enregistrée de la caméra ou **en ce qu'**une position en biais des véhicules (A₁₁, A₁₂, A₁₃, A₂₁, A₂₂, A₂₃, A₂₄) en direction d'un côté extérieur de la chaussée ou un braquage de la direction des véhicules (An, A₁₂, A₁₃, A₂₁, A₂₂, A₂₃, A₂₄) qui se trouvent derrière le véhicule (1) est détecté comme indicateur que les conducteurs des véhicules (A₁₁, A₁₂, A₁₃, A₂₁, A₂₂, A₂₃, A₂₄) tentent de libérer une bande de circulation centrale.

10. Dispositif selon la revendication 9, **caractérisé en ce que** l'unité d'interprétation (3) est conçue pour déterminer à partir des signaux si des signaux lumineux spéciaux (S) sont placés dans la zone de détection derrière le véhicule.

11. Dispositif selon la revendication 9 ou 10, l'unité d'interprétation (3) étant conçue pour, lors de la détermination, interpréter des données reçues sans fil qui contiennent des informations à propos de la situation du trafic dans la zone du véhicule (1), et/ou lors de la détermination, contrôler une vitesse actuelle du véhicule (1) et/ou contrôler une bande de circulation (F1) dans laquelle circule actuellement le véhicule (1).

12. Dispositif selon l'une des revendications 9 à 11, l'unité d'interprétation (3) étant en outre conçue pour, lors de la détermination, examiner les signaux en vue d'y déceler la présence de véhicules d'intervention (E) et/ou, lors de la détermination de la formation de la voie d'urgence (R), impliquer uniquement des signaux correspondant à une zone partielle (F1, F2) prédéterminée de l'environnement détecté du véhicule (F).

13. Dispositif selon l'une des revendications 9 à 12, l'unité d'interprétation (3) étant en outre conçue pour, lors de la détermination, effectuer une interprétation d'images qui comporte des algorithmes servant à la reconnaissance d'objet.

14. Dispositif selon l'une des revendications 9 à 13, des moyens de signalisation (5) étant associés au dispositif, lesquels sont conçus pour informer le conducteur du véhicule (1) à propos d'une situation spéciale reconnue.

15. Dispositif de déplacement autonome d'un véhicule (1) dans le trafic routier, comprenant une unité de commande destinée à générer et à envoyer des signaux pour changer de direction et/ou pour accélérer et/ou pour ralentir le véhicule (1), par le biais desquels le véhicule (1) peut être configuré pour procéder automatiquement à la formation d'une voie d'urgence (R) au moyen d'un dispositif selon l'une des revendications 9 à 14.

16. Véhicule comprenant un dispositif selon l'une des revendications 9 à 15.
